# EUROPÄISCHE PATENTSCHRIFT

(11) **EP 1 881 309 B1**
(45) Veröffentlichungstag und Bekanntmachung des Hinweises auf die Patenterteilung: **16.02.2011**
(21) Anmeldenummer: 07012344.3
(22) Anmeldetag: 23.06.2007
(51) Int. Cl.: G01K 1/08

(54) **Temperaturfühler für ein Widerstandsthermometer, insbesondere zur Verwendung im Abgasstrang von Verbrennungsmotoren**
Temperature sensor for a resistance thermometer, in particular for use in the exhaust section of combustion engines
Sonde de température pour un thermomètre à résistance, en particulier destiné à l'utilisation dans un système d'échappement de moteurs à combustion

(30) Priorität: 21.07.2006 DE 102006034246
(43) Veröffentlichungstag der Anmeldung: 23.01.2008
(73) Patentinhaber: BorgWarner BERU Systems GmbH, 71636 Ludwigsburg (DE)
(72) Erfinder: Houben, Hans, 52146 Würselen (DE); Hartmann, Robert, 71732 Tamm (DE); Lehmann, Heiner, 71642 Ludwigsburg (DE); Schneider, Werner, 71665 Vaihingen/Enz (DE); Marto, Arno, 71263 Weil der Stadt (DE)
(74) Vertreter: Twelmeier, Ulrich

(56) Entgegenhaltungen:
- DE-A1- 1 576 465
- DE-A1- 10 236 036
- DE-A1- 19 922 928
- US-A- 3 131 562

## Beschreibung

Die Erfindung geht von einem Temperaturfühler mit den im Oberbegriff des Anspruchs 1 angegebenen Merkmalen aus. Ein solcher Temperaturfühler ist aus der DE 102 36 036 A1 bekannt.

Ein ähnlicher Temperaturfühler ist aus der DE 44 24 384 C2 bekannt. Er hat einen Messwiderstand, welcher aus elektrischem Widerstandsmaterial, insbesondere platin, gebildet ist, welches sich auf einem flächenhaften Substrat befindet. Zum Aufnehmen des Messwiderstandes ist ein metallisches Schutzrohr vorgesehen, welches eine gesonderte Messspitze aufweist. Die Messspitze ist ein am vorderen Ende geschlossenes Rohr, welches, solange es noch leer ist, in seinem vorderen Abschnitt zur Bildung einer flächenhaften Verjüngung zusammengequetscht wird. In die Verjüngung wird der flächenhafte Messwiderstand geschoben, dessen vorhandene Anschlussleitüngen durch Anschlussdrähte verlängert sind, die aus dem hinteren offenen Ende der Messspitze herausführen. In die Messspitze wird nach dem Einschieben des Messwiderstandes eine Keramikmasse auf der Basis von Polysilikaten eingebracht, welche den noch verfügbaren Raum in der Messspitze füllt und dadurch den Messwiderstand vollständig einbettet, so dass nur noch die Drähte aus der Einbettmasse herausführen. Die so vorbereitete Messspitze wird dann mit einem längeren metallischen Schutzrohr verschweißt, aus welchem die verjüngte Messspitze vorsteht. In dem längeren Schutzrohr verlaufen die Anschlussdrähte in einem Luftraum und sind mit den Leitern eines Anschlusskabels verbunden, dessen Mantel durch Krimpen in einem hinteren Endabschnitt des Schutzrohres festgelegt ist. Schnelle Temperaturwechsel mit hohem Temperaturhub führen bei dem bekannten Temperaturfühler zu mechanischen Spannungen, die den Messwiderstand, seine Anschlussleitungen und deren Anschlusspunkte auf dem keramischen oder mineralischen Träger bis zum Ausfall schädigen können.

Die Einsatzbedingungen für den Temperaturfühler im Abgasstrang von Verbrennungsmotoren sind nämlich schwierig. Sie sind gekennzeichnet durch hohe Temperaturen von über 600° C bis in die Nähe von 1000°C, durch schnelle Temperaturänderungen, z. B. durch Temperaturanstiege um 800°C in nur 5 Sekunden, durch Vibrationen und das Umspültwerden von aggressiven Medien. Dem ist der bekannte Temperaturfühler nicht gewachsen. Die schnellen Temperaturänderungen führen in Verbindung mit den unterschiedlichen Wärmeausdehnungskoeffizienten, welche die metallischen Anschlussdrähte einerseits und die keramische Einbettmasse andererseits haben, zu Beanspruchungen der Anschlussdrähte, die dazu führen können, dass die Anschlussdrähte abreißen. Den größten Teil des Schutzrohres deshalb frei von keramischer Einbettmasse zu lassen, wie es die DE 44 24 384 C2 offenbart, ist keine Lösung des Problems, weil die freiliegenden Anschlussdrähte durch die dauernden Vibrationen gefährdet sind.

Temperaturfühler, wie sie in der DE 102 54 637 B4 und in der DE 199 22 928 A1 offenbart sind, wo ein in koaguliertes keramisches Pulver, z. B. Aluminiumoxid, eingebetteter Thermistor an ein mineralisoliertes Kabel angeschlossen ist, welches unmittelbar an die Aluminiumoxid-Einbettmasse anschließt, weisen ähnliche Nachteile auf.

Aus der DE 100 34 265 ist ein Temperaturfühler bekannt, dessen Messwiderstand sich in einem geschlossenen Schutzrohr befindet, in welchem er nicht in ein isolierendes keramisches Material eingebettet ist, sondern in einer Luftkammer liegt. Als Anschlusskabel dient ein mineralisch isoliertes zweiadriges Kabel mit Metallmantel, welches mit dem hinteren Abschnitt des Schutzrohres für den Messwiderstand verschweißt ist. In diesem Fall ist der im Schutzrohr frei in einer Luftkammer liegende Messwiderstand besonders durch Vibrationen gefährdet und spricht träge an, weil er durch die ihn umgebende Luft gut wärmeisoliert ist. Um diesem Nachteil zu begegnen, ist es aus der DE 101 58 527 A1 bekannt, in der Spitze des Schutzrohres, im Bereich des Messwiderstandes, Öffnungen vorzusehen, durch welche das Abgas eindringen und den Messwiderstand umströmen kann. Dadurch spricht der Temperaturfühler zwar schneller auf Temperaturänderungen an, der Messwiderstand ist jedoch dem chemischen Angriff der Abgase ausgesetzt, neigt zur Verschmutzung durch Ablagerung unverbrannter Kraftstoffreste, insbesondere Russ und Kondensat, was zusätzlich die Gefahr mit sich bringt, dass zwischen den Zuleitungen des Messwiderstandes ein elektrischer Nebenschluss gebildet ist. Obendrein sind Messwiderstände, die dem Abgas in einem offenen Schutzrohr ausgesetzt werden müssen, wesentlich teuerer als Messwiderstände, die in geschlossenen Schutzrohren eingesetzt werden können.

Die einander teilweise widersprechenden Anforderungen an Temperaturfühler, die im Abgasstrang von Verbrennungsmotoren eingesetzt werden sollen, erschweren das Auffinden eines Temperaturfühlers, welcher für einen Einsatz im Abgasstrang von Verbrennungsmotoren in Fahrzeugen nicht nur preiswert, sondern auch zuverlässig, mechanisch stabil, langlebig, unempfindlich gegenüber den chemischen Angriffen des heißen Abgases sein und auf Temperaturänderungen schnell ansprechen soll.

Diese Aufgabe wird gelöst durch einen Temperaturfühler mit den im Anspruch 1 angegebenen Merkmalen. Vorteilhafte Weiterbildungen der Erfindung sind Gegenstand der abhängigen Ansprüche.

Der erfindungsgemäße Temperaturfühler hat einen elektrischen Messwiderstand, welcher als Widerstandsmaterial entweder einen keramischen Werkstoff oder ein metallisches Widerstandsmaterial in Verbindung mit einem keramischen oder mineralischen Träger aufweist. Ein Schutzrohr, welches eine geschlossene Spitze und ein hinteres Ende mit einem Zugang zum Innenraum des Schutzrohres hat, enthält den Messwiderstand. Aus dem hinteren Ende des Schutzrohres führt mindestens ein Anschlussdraht des Messwiderstandes heraus. Ein zweiter Anschlussdraht des Messwiderstandes führt entweder ebenfalls aus dem hinteren Ende des Schutzrohres heraus oder ist mit der Spitze des Schutzrohres verbunden; im zweiten Fall schützt das Schutzrohr den Messwiderstand nicht nur, sondern dient auch als eine seiner Zuleitungen. In dem Schutzrohr ist der Messwiderstand in einen Füllstoff auf der Grundlage eines keramischen oder mineralischen Materials eingebettet. Der Füllstoff erstreckt sich im wesentlichen über die Länge des Messwiderstandes. Damit, dass sich der Füllstoff "im wesentlichen" über die Länge des Messwiderstandes erstreckt, soll folgendes zum Ausdruck gebracht werden: Der Messwiderstand, der auf einem keramischen oder mineralischen Träger angebracht ist, befindet sich gut eingepackt und vor Vibrationsbeanspruchungen geschützt im Schutzrohr. Dieses Ziel lässt sich auch erreichen, wenn der Messwiderstand nicht vollständig in den Füllstoff eingebettet ist. Soweit der Messwiderstand nicht in den Füllstoff eingebettet ist, ist der Wärmeübergang vom Schutzrohr auf den Messwiderstand behindert, so dass dieser träger auf Temperaturänderungen anspricht. Der Wärmeübergang vom Schutzrohr auf den Messwiderstand erfolgt jedoch teilweise auch dadurch, dass der Füllstoff die Wärme auf den keramischen Träger des Messwiderstandes überträgt und dass der Träger die Wärme auch zu einem Abschnitt des Messwiderstandes leiten würde, welcher nicht in den Füllstoff eingebettet ist. Soweit eine fehlende Einbettung des Messwiderstandes in den Füllstoff im Hinblick auf die Ansprechgeschwindigkeit des Messwiderstandes auf Temperaturänderungen von untergeordneter Bedeutung oder vernachlässigbar ist, soll sie vom Schutzumfang umfasst sein und dass soll durch die Formulierung zum Ausdruck gebracht werden, dass sich "der Füllstoff im wesentlichen über die Länge des Messwiderstandes erstreckt".Der wenigstens eine Anschlussdraht, der aus dem hinteren Ende des Schutzrohres hinausführt, soll jedoch nicht in den Füllstoff eingebettet sein; er ist mit einem Innenleiter eines mineralisch oder keramisch isolierten Kabels mit Metallmantel verbunden. Dieses Kabel dient zur Verbindung des Temperaturfühlers mit einem Auswertegerät und/oder einem Anzeigegerät und/oder einem Steuergerät, welche auch zusammengefasst sein können. Der Metallmantel dieses Kabels ist durch eine metallische Hülse mit dem hinteren Ende des Schutzrohres verbunden. In der metallischen Hülse ist eine Dehnungsausgleichseinrichtung für den wenigstens einen Anschlussdraht des Messwiderstandes angeordnet, welcher mit einem Innenleiter des Kabels verbunden ist.

Mit der Kombination dieser Merkmale ist eine Optimierung des Temperaturfühlers gelungen, welche eine ganze Reihe von Vorteilen aufweist, deren Vereinigung bisher an den einander teilweise widersprechenden Anforderungen an den Temperaturfühler scheiterte.
- Der Messwiderstand befindet sich geschützt in einem geschlossenen Schutzrohr, so dass er den Angriffen der heißen Abgase nicht ausgesetzt ist. Die heißen Abgase wirken vielmehr ausschließlich auf das Schutzrohr ein, für welches geeignete hochwärmebeständige und chemisch widerstandsfähige Metalle und Metalllegierungen bekannt sind.
- Das Schutzrohr kann einstückig hergestellt und verwendet werden, was für eine preiswerte Herstellung günstig ist.
- Der Messwiderstand ist in einen keramischen Füllstoff eingebettet, welcher den Messwiderstand sowohl vor den für den Einsatzzweck typischen Vibrationsbeanspruchungen schützt als auch für einen guten Wärmeübergang vom Schutzrohr auf den elektrischen Messwiderstand sorgt, so dass er auf Temperaturänderungen rasch anspricht.
- Dadurch, dass der wenigstens eine Anschlussdraht, welcher aus dem hinteren Ende des Schutzrohres herausführt, nicht in den Füllstoff eingebettet ist, können Unterschiede in der Wärmedehnung der Anschlussdrähte und des Füllstoffes die Anschlussdrähte nicht belasten. Je geringer die Masse der Anschlussdrähte ist, desto widerstandsfähiger sind sie gegen Vibrationen. Die Gefahr, dass Anschlussdrähte infolge von mechanischen Spannungen, welche durch Temperaturänderungen induziert werden, reißen und der Temperaturmessfühler deshalb ausfällt, wird erfindungsgemäß dadurch klein gehalten, dass eine Dehnungsausgleichseinrichtung für den wenigstens einen Anschlussdraht vorgesehen ist. Diese befindet sich zweckmäßigerweise in einer Hülse, welche das Schutzrohr mit dem metallischen Mantel eines keramisch oder mineralisch isolierten Anschlusskabels, insbesondere durch Schweißen oder Hartlöten verbindet. Diese Hülse dient mit Vorteil dazu, die Dehnungsausgleichseinrichtung aufzunehmen. Bei dieser kann es sich um ein Federelement handeln. Besonders geeignet ist es, die Dehnungsausgleichseinrichtung als gebogenen Abschnitt des wenigstens einen Anschlussdrahtes und/oder des daran befestigten Innenleiters des mineralisch oder keramisch isolierten Kabels auszubilden. Im Luftraum zwischen dem hinteren Ende des Schutzrohres und dem vorderen Ende des Kabels kann die Dehnungsausgleichseinrichtung Wärmespannungen, die sonst in den Anschlussdrähten zu einem Schaden führen könnten, gefahrlos ausgleichen.
- Die Hülse hat den weiteren Vorteil, dass sie zugleich als ein an die jeweilige Einsatzaufgabe angepasster Träger für den Temperaturfühler dienen kann. Die Hülse kann z. B. mit einem Befestigungsflansch oder mit einer Gewindebuchse versehen sein, mit welcher der Temperaturfühler an seinem Einsatzort festgelegt werden kann. Die Spitze des Temperaturfühlers, welche durch das Schutzrohr und den darin untergebrachten Messwiderstand gebildet ist, kann hingegen für unterschiedliche Einsatzbedingungen gleich bleiben und als gleichbleibendes Standardbauteil mit unterschiedlichen Hülsen bzw. mit unterschiedlich armierten Hülsen verbunden werden.

Der Füllstoff füllt das Schutzrohr vorzugsweise bis zu dessen hinterem Ende. Das bedeutet, dass der Träger des Messwiderstandes, von welchem der wenigstens eine Anschlussdraht des Messwiderstandes ausgeht, ein Stück weit über das hintere Ende des Schutzrohrs in die Hülse hinausragt, welche das Schutzrohr mit dem Metallmantel des Kabels verbindet.

Um diese Verbindung zu erleichtern, hat das Schutzrohr vorzugsweise einen zylindrischen hinteren Abschnitt und einen demgegenüber verjüngten vorderen Abschnitt und zwischen diesen beiden Abschnitten einen Übergangsabschnitt. Die Verjüngung hat den Sinn, die Dicke der Füllstoffschicht zwischen dem Schutzrohr und dem Messwiderstand klein zu halten, denn das begünstigt ein schnelles Ansprechen des Temperaturfühlers auf Temperaturänderungen. Ist der verjüngte Abschnitt des Schutzrohres im wesentlichen zylindrisch, dann erleichtert das die Füllung des Schutzrohres mit dem Füllstoff. Ist die Querschnittsgestalt des verjüngten Abschnitts dem Querschnitt des Messwiderstandes und seines Trägers angepasst, begünstigt das ein schnelles Ansprechen des Messfühlers. Vorzugsweise hat der vordere Abschnitt des Schutzrohres - abgesehen von einer eventuellen Rundung an der Spitze - einen im wesentlichen gleich bleibenden Querschnitt.

Als Füllstoff besonders geeignet ist Magnesiumoxid, welches hoch temperaturbeständig, preiswert und leicht zu verarbeiten ist. Als Füllstoff geeignet sind auch Aluminiumoxid, Aluminiumnitrid und Polysilikate in Pulverform. Besonders eignen sich keramische Vergussmassen, keramische Kleber und hoch temperaturbeständige Wärmeleitpasten als Füllstoffe. Ein Beispiel für eine geeignete keramische Vergussmasse wird von der Panacol-Elosol GmbH in D-61440 Oberursel unter dem Handelsnamen Cerastil V336 angeboten, welches durch chemische Reaktion abbindet und bei 1650° beständig ist. Ein Beispiel für einen geeigneten keramischen Kleber wird von der Cotronics Corp. In Brooklyn, NY 11235 unter dem Handelsnamen Cotronics 906 vertrieben.

Als Messwiderstände eignen sich für den Temperaturbereich von 600°C bis ca. 1000°C keramische Heißleiter, d. h. keramische Messwiderstände mit negativem Temperaturkoeffizienten. Besonders bevorzugt sind für Zwecke der Erfindung Flachmesswiderstände. Flachmesswiderstände bestehen aus einem metallischen Widerstandsmaterial, welches auf einen flachen keramischen Träger, auch als Substrat bezeichnet, gedruckt ist. Bewährte Substrate sind Plättchen aus Aluminiumoxid. Zur Schonung des Widerstandsmaterials kann dieses auch zwischen zwei keramischen Plättchen liegen, die ein Sandwich bilden. Besonders geeignet sind Messwiderstände aus Platin oder aus einer Platinlegierung, insbesondere Pt-100 oder Pt-200-Widerstände, d. h. Platinwiderstände, die bei 0°C einen Widerstand von 100 Ohm bzw. 200 Ohm haben. Solche Widerstände können auf ein Aluminiumsubstrat gedruckt sein und Anschlussdrähte aus entsprechend hochtemperaturbeständigem Metall haben, z. B. wiederum aus Platin oder aus einer Platinlegierung. Meist sind die Anschlussdrähte aus Platin aber nur kurz und werden durch preiswertere Anschlussdrähte aus einem anderen hochtemperaturbeständigen Metall, z. B. aus einer FeNiCr-Legierung verlängert.

Schutzrohre, die den hohen Temperaturen und chemischen Angriffen im Abgas Stand halten, sind bekannt. Beispiele sind hochtemperaturbeständige Nickellegierungen, z. B. Inconel-Legierungen, insbesondere Inconel 600, Inconel 601 und Inconel 602. Inconel-Legierungen sind eine Familie von hochtemperaturbeständigen, gegen Oxidation und andere Korrosion besonders widerstandsfähigen Superlegierungen auf Nickelbasis. Inconel 600 z. B. besteht aus 72 % Nickel, 16 % Chrom und 8 % Eisen.

Es ist ein besonderer Vorteil der Erfindung, dass der Temperaturfühler in Standardabmessungen vorgefertigt und durch Verbinden mit einer Halterung, welche auf die jeweiligen Einsatzbedingungen abgestimmt ist, zu einem montierbaren, z. B. einschraubbaren Temperaturfühler ergänzt werden kann.

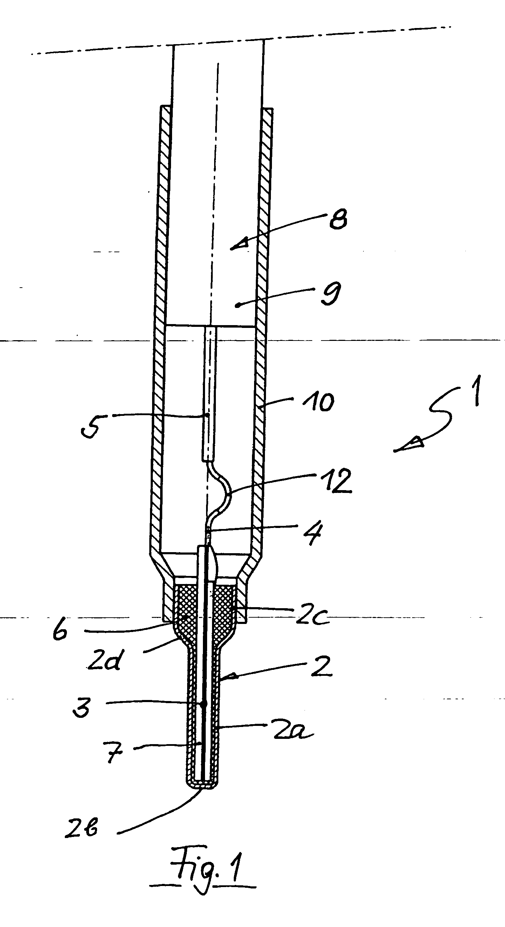

### Figur 1 zeigt ein Ausführungsbeispiel eines Temperaturfühlers in einem Längsschnitt

Der in Figur 1 dargestellte Temperaturfühler 1 hat in einem Schutzrohr 2 auf einem keramischen Träger 7 einen Messwiderstand 3 mit zwei Anschlussdrähten 4. Der Messwiderstand 3 und sein Träger 7 sind in einen keramischen oder mineralischen Füllstoff 6 eingebettet.

Der Messwiderstand 3 ist vorzugsweise ein Platinwiderstand, welcher auf ein keramisches Plättchen als Träger 7 gedruckt ist.

Das Schutzrohr 2 hat einen schlanken, zylindrischen vorderen Abschnitt 2a mit einem geschlossenen stumpfen Ende 2b, einen zylindrischen hinteren Abschnitt 2c, dessen Durchmesser größer ist als der Durchmesser des vorderen Abschnitts 2a und einen konischen Übergangsabschnitt 2d. Alternativ kann das geschlossene Ende 2b abgerundet und/oder der Übergangsabschnitt 2d gestuft sein.

Der Messwiderstand 3 und sein Träger 7 und der Durchmesser des vorderen Abschnitts 2a des Schutzrohres 2 sind zum Erzielen eines raschen Ansprechens des Temperaturfühlers so aufeinander abgestimmt, dass zwischen dem Träger 7 mit dem Messwiderstand 3 und dem Schutzrohr 2 kein unnötig großer Abstand besteht.

Das Schutzrohr 2 besteht aus einem hoch wärmebeständigen Metall, z. B. aus Inconel 600. Der Füllstoff 6 besteht z. B. aus Magnesiumoxidpulver, aus Aluminiumoxidpulver oder aus Aluminiumnitridpulver, vorzugsweise aus einer keramischen Vergussmasse wie z. B. Cerastil V336. Nach dem Einführen des Messwiderstandes 3 in das Schutzrohr 2 wird der Füllstoff 6 so eingefüllt, dass er den Messwiderstand 3 umschließt. Das kann bei pulverigem Füllstoff durch schrittweises Einfüllen in Verbindung mit Klopfen oder Rütteln geschehen, gefolgt von einem Nachverdichten. Eine bevorzugt verwendete Vergussmasse wird eingegossen und bindet dann ab.

Die freiliegenden Anschlussdrähte 4 werden z. B. durch Schweißen, Hartlöten oder Krimpen mit den Innenleitern 5 eines zweiadrigen Anschlusskabels 8 verbunden, dessen Mantel 9 aus Metall besteht. Dabei wird mit den Anschlussdrähten 4 eine Schleife 12 gebildet, welche eine Dehnungsausgleichseinrichtung darstellt.

Zum Verbinden des Schutzrohrs 2 mit dem Mantel 9 des Anschlusskabels 8 ist eine metallische Hülse 10 vorgesehen, deren eines Ende auf den hinteren Abschnitt 2c des Schutzrohres 2 geschoben und mit diesem zweckmäßigerweise verschweißt oder hart verlötet ist. In das andere Ende der Hülse 10 wird das Anschlusskabel 8 eingeführt, dessen zwei Innenleiter 5 mit den Anschlussdrähten 4 des Messwiderstandes 3 zu verbinden sind. Die Verbindung kann durch Schweißen, Hartlöten oder Krimpen geschehen.

In dem Anschlusskabel 8 sind die Innenleiter 5 gegenüber dem Mantel 9 durch einen keramischen oder mineralischen Isolierstoff isoliert. Als Isolierstoff besonders geeignet sind Aluminiumoxid und Magnesiumoxid.

Die Hülse 10 kann zur Anpassung an unterschiedliche Einsatzbedingungen z. B. mit einem Befestigungsflansch oder mit einer Gewindebuchse versehen sein, die ein Verschrauben des Temperaturfühlers 1 am Einsatzort ermöglicht.

Das Schutzrohr 2 mit dem Messwiderstand 3 darin 1 kann als gleich bleibendes Standardbauteil mit unterschiedlich ausgestatteten Hülsen 10 und mit unterschiedlich langen Anschlusskabeln 8 verbunden sein.

### Bezugszahlenliste:

- 1.: Temperaturfühler
- 2.: Schutzrohr
- 2a.: vorderer Abschnitt
- 2b.: stumpfes Ende von 2a
- 2c.: hinterer Abschnitt
- 2d.: Übergangsabschnitt
- 3.: Messwiderstand
- 4.: Anschlussdrähte
- 5.: Innenleiter
- 6.: Füllstoff
- 7.: Träger
- 8.: Kabel
- 9.: Mantel
- 10.: Hülse
- 12.: Ausgleichsbiegung

## Patentansprüche

1. Temperaturfühler für ein Widerstandsthermometer
- mit einem elektrischen Messwiderstand (3), welcher als Widerstandsmaterial entweder einen keramischen Werkstoff oder ein metallisches Widerstandsmaterial in Verbindung mit einem keramischen oder mineralischen Träger (7) aufweist,
- mit einem Schutzrohr (2), welches eine geschlossene Spitze (2b) und ein hinteres Ende mit einem Zugang zum Innenraum des Schutzrohrs (2) hat und den Messwiderstand (3) enthält,
- mit mindestens einem aus dem hinteren Ende des Schutzrohres (2) herausführenden Anschlussdraht (4) des Messwiderstands (3), und
- mit einem elektrisch isolierenden Füllstoff (6) auf der Grundlage eines keramischen oder mineralischen Materials, welches den Raum zwischen dem Schutzrohr (2) auf der einen Seite und dem Messwiderstand (3) auf der anderen Seite ausfüllt,
wobei der wenigstens eine Anschlussdraht (4) mit einem Innenleiter (5) eines Kabels (8) verbunden ist, das durch eine metallischen Hülse (10) mit dem hinteren Ende des Schutzrohres (2) verbunden ist,
**dadurch gekennzeichnet, dass** sich der Füllstoff (6) im wesentlichen über die Länge des Messwiderstandes (3) erstreckt, dessen vom Träger (7) ausgehenden wenigstens einen Anschlussdraht (4) jedoch freilässt,
dass das Kabel (8) mineralisch oder keramisch isoliert ist und einen Metallmantel (9) hat,
dass der Metallmantel (9) des Kabels (8) durch die metallische Hülse (10) mit dem hinteren Ende des Schutzrohres (2) verbunden ist,
und dass in der Hülse (10) eine Dehnungsausgleichseinrichtung (12) für den wenigstens einen Anschlussdraht (4) des Messwiderstands (3) angeordnet ist.

2. Temperaturfühler nach Anspruch 1, **dadurch gekennzeichnet, dass** die Dehnungsausgleichseinrichtung (12) federnd ausgebildet ist.

3. Temperaturfühler nach Anspruch 1 oder 2, **dadurch gekennzeichnet, dass** die Dehnungsausgleichseinrichtung (12) ein gebogener Abschnitt des wenigstens einen Anschlussdrahtes (4) und/oder des daran befestigten Innenleiters (5) des Kabels (8) ist.

4. Temperaturfühler nach einem der vorstehenden Ansprüche, **dadurch gekennzeichnet, dass** der Füllstoff (6) das Schutzrohr (2) bis zu dessen hinterem Ende füllt und dass der Träger (7) über das hintere Ende des Schutzrohrs (2) hinaus in die Hülse (10) ragt.

5. Temperaturfühler nach einem der vorstehenden Ansprüche, **dadurch gekennzeichnet, dass** das Schutzrohr (2) einen zylindrischen hinteren Abschnitt (2c), einen demgegenüber verjüngten vorderen Abschnitt (2a) und einen Übergangsabschnitt (2d) hat.

6. Temperaturfühler nach Anspruch 5, **dadurch gekennzeichnet, dass** das der vordere Abschnitt (2a) des Schutzrohres (2) einen im wesentlichen gleich bleibenden Querschnitt hat.

7. Temperaturfühler nach einem der vorstehenden Ansprüche, **dadurch gekennzeichnet, dass** das Schutzrohr (2) aus einem Metall besteht.

8. Temperaturfühler nach Anspruch 7, **dadurch gekennzeichnet, dass** das Schutzrohr (2) aus einer hochtemperaturbeständigen Legierung, insbesondere aus einer Nickellegierung wie zum Beispiel Inconel besteht, insbesondere aus Inconel 600 oder aus Inconel 601.

9. Temperaturfühler nach einem der vorstehenden Ansprüche, **dadurch gekennzeichnet, dass** als Füllstoff (6) Magnesiumoxid, Aluminiumoxid, Aluminiumnitrid oder deren Mischungen in Pulverform vorgesehen sind.

10. Temperaturfühler nach einem der Ansprüche 1 bis 8, **dadurch gekennzeichnet, dass** als Füllstoff (6) eine keramische Vergussmasse, ein keramischer Kleber oder eine hochtemperaturbeständige Wärmeleitpaste vorgesehen ist.

11. Temperaturfühler nach einem der vorstehenden Ansprüche, **dadurch gekennzeichnet, dass** der Messwiderstand (3) einen negativen Temperaturkoeffizienten hat.

12. Temperaturfühler nach einem der vorstehenden Ansprüche, **dadurch gekennzeichnet, dass** der Messwiderstand (3) ein Flachmesswiderstand ist.

13. Temperaturfühler nach einem der Ansprüche 1 bis 10 und 12, **dadurch gekennzeichnet, dass** der Messwiderstand (3) mit Platin oder mit einer Platinlegierung gebildet ist, insbesondere ein Pt-100- oder Pt-200-Widerstand ist.

## Claims

1. Temperature sensor for a resistance thermometer
- having an electric measuring resistor (3) the resistance material of which consists either of a ceramic material or of a metallic resistance material in combination with a ceramic or a mineral carrier (7);
- having a protective tube (2) comprising a closed tip (2b) and a rear end that provides an access to the inner space of the protective tube (2) and that contains the measuring resistor (3);
- having at least one connection wire (4) of the measuring resistor (3) that is brought out through the rear end of the protective tube (2);
- and having an electrically insulating filler (6) based on a ceramic or a mineral material that fills space between the protective tube (2) on the one side and the measuring resistor (3) on the other side,
wherein the at least one connection wire (4) is connected with an inner conductor (5) of a mineral-insulated or a ceramic-insulated metal-sheathed (9) cable (8);
**characterized in that** the filler (6) extends substantially over the length of the measuring resistor (3), while leaving exposed the at least one connection wire (4) that extends from the carrier (7);
that the metal sheath (9) of the cable (8) is connected with the rear end of the protective tube (2) by a metallic sleeve (10);
and that an expansion compensating means (12) for the at least one connection wire (4) of the measuring resistor (3) is arranged in the sleeve (10).

2. The temperature sensor as defined in Claim 1, **characterized in that** the expansion compensating means (12) has a resilient design.

3. The temperature sensor as defined in Claim 1 or Claim 2, **characterized in that** the expansion compensating means (12) is a bent section of the at least one connection wire (4) and/or of the inner conductor (5) of the cable (8) fixed thereon.

4. The temperature sensor as defined in any of the preceding claims, **characterized in that** the filler (6) fills the protective tube (2) up to its rear end and that the carrier (7) projects beyond the rear end of the protective tube (2) and into the sleeve (10).

5. The temperature sensor as defined in any of the preceding claims, **characterized in that** the protective tube (2) comprises a cylindrical rear section (2c), a narrower forward section (2a), compared with the rear section, and a transition portion (2d).

6. The temperature sensor as defined in Claim 5, **characterized in that** the forward section (2a) of the protective tube (2) exhibits a substantially constant cross-section.

7. The temperature sensor as defined in any of the preceding claims, **characterized in that** the protective tube (2) consists of a metal.

8. The temperature sensor as defined in Claim 7, **characterized in that** the protective tube (2) consists of a highly temperature-resistant alloy, especially of a nickel alloy such as Inconel, especially of Inconel 600 or of Inconel 601.

9. The temperature sensor as defined in any of the preceding claims, **characterized in that** magnesium oxide powder, aluminum oxide powder, aluminum nitride powder or mixtures thereof are provided as the filler (6).

10. The temperature sensor as defined in any of Claims 1 to 8, **characterized in that** a ceramic casting compound, a ceramic adhesive or a highly temperature-resistant heat-transfer paste is provided as filler (6).

11. The temperature sensor as defined in any of the preceding claims, **characterized in that** the measuring resistor (3) has a negative temperature coefficient.

12. The temperature sensor as defined in any of the preceding claims, **characterized in that** the measuring resistor (3) is a flat measuring resistor.

13. The temperature sensor as defined in any of Claims 1 to 10 and 12, **characterized in that** the measuring resistor (3) is formed using platinum or a platinum alloy, especially is a Pt-100 or Pt-200 resistor.

## Revendications

1. Capteur de température pour un thermomètre à résistance,
- avec une résistance électrique de mesure (3) comportant, en tant que matériau de résistance, soit une matière céramique soit un matériau de résistance métallique en association avec un support céramique ou minéral (7),
- avec un tube de protection (2) possédant une pointe fermée (2b) et une extrémité arrière avec un accès à l'espace intérieur du tube de protection (2) et contenant la résistance de mesure (3),
- avec au moins un fil de connexion (4) de la résistance de mesure (3) sortant de l'extrémité arrière du tube de protection (2), et
- avec un agent de charge (6) électriquement isolant, à base d'un matériau céramique ou minéral, remplissant l'espace entre le tube de protection (2) d'un côté et la résistance de mesure (3) de l'autre côté, dans lequel l'au moins un fil de connexion (4) est relié au conducteur interne (5) d'un câble (8) relié à l'extrémité arrière du tube de protection (2) par une douille métallique (10),
**caractérisé en ce que** l'agent de charge (6) s'étend essentiellement sur la longueur de la résistance de mesure (3), mais tout en laissant libre l'au moins un fil de connexion (4) de celle-ci en partant du support (7),
**en ce que** le câble (8) est isolée de façon minérale ou céramique et possède une enveloppe métallique (9),
**en ce que** l'enveloppe métallique (9) du câble (8) est reliée à l'extrémité arrière du tube de protection (2) par une douille métallique (10),
et **en ce qu'**un dispositif de compensation d'extension (12) est installé dans la douille (10), pour l'au moins un fil de connexion (4) de la résistance de mesure (3).

2. Capteur de température selon la revendication 1, **caractérisé en ce que** le dispositif de compensation d'extension (12) est conçu élastique.

3. Capteur de température selon la revendication 1 ou 2, **caractérisé en ce que** le dispositif de compensation d'extension (12) est une section courbe de l'au moins un fil de connexion (4) et/ou du conducteur interne (5) du câble (8) fixé à celui-ci.

4. Capteur de température selon l'une des revendications précédentes, **caractérisé en ce que** l'agent de charge (6) remplit le tube de protection (2) jusqu'à l'extrémité arrière de celui-ci, et **en ce que** le support (7) fait saillie dans la douille (10) pardessus l'extrémité arrière du tube de protection (2).

5. Capteur de température selon l'une des revendications précédentes, **caractérisé en ce que** le tube de protection (2) possède une section arrière cylindrique (2c), une section avant (2a) rétrécie par rapport à la première, et une section de transition (2d).

6. Capteur de température selon la revendication 5, **caractérisé en ce que** la section avant (2a) du tube de protection (2) présente une section transversale quasiment constante.

7. Capteur de température selon l'une des revendications précédentes, **caractérisé en ce que** le tube de protection (2) est constitué d'un métal.

8. Capteur de température selon la revendication 7, **caractérisé en ce que** le tube de protection (2) est constitué d'un alliage résistant aux températures élevées, en particulier un alliage à base de nickel, tel que par exemple l'Iconel, en particulier l'Iconel 600 ou l'Iconel 601.

9. Capteur de température selon l'une des revendications précédentes, **caractérisé en ce qu'**en tant qu'agent de charge (6), il est prévu d'utiliser de l'oxyde de magnésium, de l'oxyde d'aluminium, du nitrate d'aluminium ou leurs mélanges sous forme de poudre.

10. Capteur de température selon l'une des revendications 1 à 8, **caractérisé en ce qu'**en tant qu'agent de charge, il est prévu d'utiliser une masse de scellement céramique, un adhésif céramique ou une pâte à conduction thermique résistante aux températures élevées.

11. Capteur de température selon l'une des revendications précédentes, **caractérisé en ce que** la résistance de mesure (3) a un coefficient de température négatif.

12. Capteur de température selon l'une des revendications précédentes, **caractérisé en ce que** la résistance de mesure (3) est une résistance de mesure plate.

13. Capteur de température selon l'une des revendications 1 à 10 et 12, **caractérisé en ce que** la résistance de mesure (3) est formée avec du platine ou avec un alliage à base de platine, et est en particulier une résistance Pt-100 ou Pt-200.
